# FASCICULE DE BREVET EUROPEEN

(11) **EP 0 496 242 B1**
(45) Date de publication et mention de la délivrance du brevet: **15.03.1995**
(21) Numéro de dépôt: 92100433.9
(22) Date de dépôt: 13.01.1992
(51) Int. Cl.: A47J 31/40

(54) **Machine à café automatique**
Automatische Kaffeemaschine
Automatic coffee machine

(30) Priorité: 25.01.1991 FR 9100845
(43) Date de publication de la demande: 29.07.1992
(73) Titulaire: MOULINEX S.A., F-93170 Bagnolet (FR)
(72) Inventeur: Landais, Francis Pierre Jacques, F-72600 Mamers (FR); Morin, Gilles Gérard Albert Victor, F-61000 Alençon (FR)
(74) Mandataire: May, Hans Ulrich, Dr.

(56) Documents cités:
- EP-A- 73 739
- EP-A- 0 237 399
- CH-A- 511 009
- CH-A- 635 740
- FR-A- 1 293 783
- GB-A- 761 523

## Description

L'invention se rapporte à une machine à café automatique comportant, dans un boîtier, un corps fixe qui comporte un cylindre fermé, d'une part, par un couvercle et, d'autre part, par un embout traversé par un arbre rotatif relié à des moyens motorisés, et dans lequel sont pratiquées des ouvertures, une ouverture de passage de la mouture destinée à l'introduction d'une quantité de mouture de café, une ouverture d'alimentation en liquide destinée à introduire une quantité d'eau chaude provenant d'un chauffe-eau, un passage d'évacuation d'infusion, et une ouverture d'éjection du marc.

L'invention concerne plus particulièrement une machine à café de ce type dans laquelle ledit cylindre est aménagé de manière à renfermer une chambre d'infusion cylindrique limitée à ses extrémités, d'une part, par le couvercle et, d'autre part, par la face frontale d'un piston qui est monté coulissant dans le cylindre grâce à des moyens d'entraînement en translation solidaires en rotation dudit arbre, et qui peut occuper au moins deux positions, soit une position de repos pour laquelle le piston est en retrait de l'ouverture de passage de mouture, autorisant l'écoulement de ladite mouture dans la chambre, soit une position de tassage.

Un tel dispositif est notamment décrit dans CH-A-511009.

Dans les machines connus de ce genre, la mouture de café est introduite dans la chambre d'infusion qui est alors rendue étanche. Le piston tasse la mouture. L'eau chaude est ensuite versée sur la mouture, puis quand l'infusion s'est produite, elle est évacuée par l'ouverture d'évacuation d'infusion, tandis que le marc est éjecté. Pour réaliser ce cycle, on a recours à des mécanismes compliqués et coûteux, peu fiables dans le temps.

De plus, ces machines ne permettent que la confection d'infusion du type "espresso", le volume de la chambre d'infusion étant constante au moment de l'infusion, et la pression définie par le piston étant aussi toujours constante.

L'invention a pour but de simplifier les mécanismes existants, et de réaliser un appareil particulièrement simple, fiable et peu couteux.

Selon l'invention, une chemise tubulaire est montée coulissante à l'intérieur du cylindre au moyen d'un dispositif d'actionnement relié à l'arbre, le piston étant lui-même monté coulissant dans la chemise, et comporte une lumière pratiquée dans sa paroi latérale, la chemise pouvant occuper deux positions, soit une position de remplissage en laquelle la chemise vient en butée contre le couvercle et ferme l'ouverture d'éjection du marc, faisant coïncider la lumière avec l'ouverture de passage de la mouture, et pour laquelle le piston passe de sa position de repos à sa position de tassage, pour laquelle l'ouverture (8) de passage de la mouture étant fermée, le piston (17) tasse la mouture (M) au dessus de l'ouverture (14) d'éjection contre le couvercle (4), soit une position d'éjection en laquelle la chemise ferme l'ouverture de passage de la mouture, laissant libre l'ouverture d'éjection du marc, et pour laquelle après l'éjection du marc, le piston passe de sa position de tassage à sa position de repos, les différentes positions étant définies les unes par rapport aux autres par un sélecteur du nombre de tours de rotation de l'arbre rotatif.

Grâce à la commande unique et simultanée par l'arbre des moyens d'entraînement en translation du piston et du dispositif d'actionnement de la chemise, il suffit de faire effectuer à l'arbre un certain nombre de tours pour obtenir automatiquement toutes les positions rigoureuses de la chemise définissant un cycle complet de préparation de café. Cette combinaison corps, chemise et piston permet d'obtenir un bloc compact facile à fabriquer par moulage et dont les pièces sont susceptibles d'être assemblées de façon automatique dans une fabrication en grande série sans avoir besoin d'effectuer des réglages de course de ces différentes pièces les unes par rapport aux autres.

Selon une autre caractéristique de l'invention, le piston peut, en outre, occuper une position de tassage intermédiaire entre la position de repos et la position de tassage pour laquelle le piston tasse partiellement la mouture au dessus de l'ouverture d'éjection du marc, de manière à obtenir une pression dans la chambre d'infusion plus faible que pour la position de tassage normale.

Ainsi, en jouant sur le nombre de tours de rotation de l'arbre, l'utilisateur peut au choix confectionner à partir d'une même quantité de café, soit un café du type "espresso" pour lequel le piston vient directement en bout de course correspondant à la position de tassage, de manière à augmenter la pression dans la chambre d'infusion, soit un café du type "long" pour lequel le piston s'arrête avant la position de tassage en sa position intermédiaire, permettant d'obtenir une pression plus faible dans la chambre d'infusion, puis continue pour atteindre la position de tassage permettant alors d'extraire du marc toute l'infusion.

D'autres modes particuliers d'exécution sont l'objet des revendications dépendantes.

Les caractéristiques et avantages de l'invention ressortiront d'ailleurs de la description qui va suivre, à titre d'exemple, en référence aux dessins annexés dans lesquels :

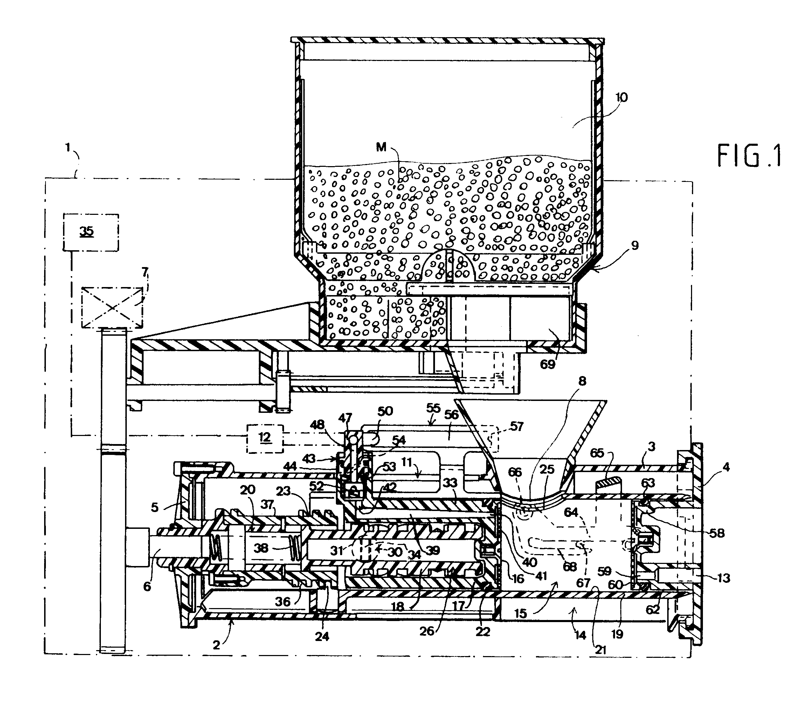

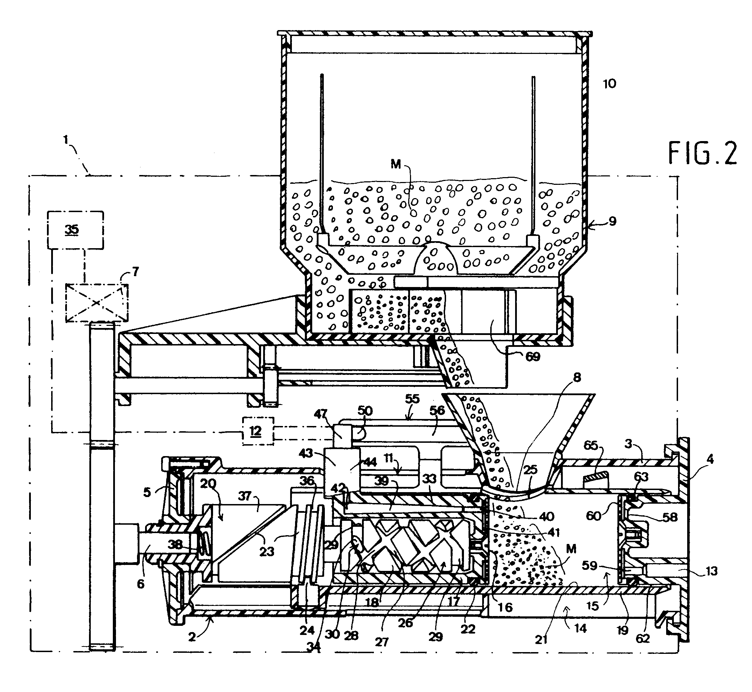

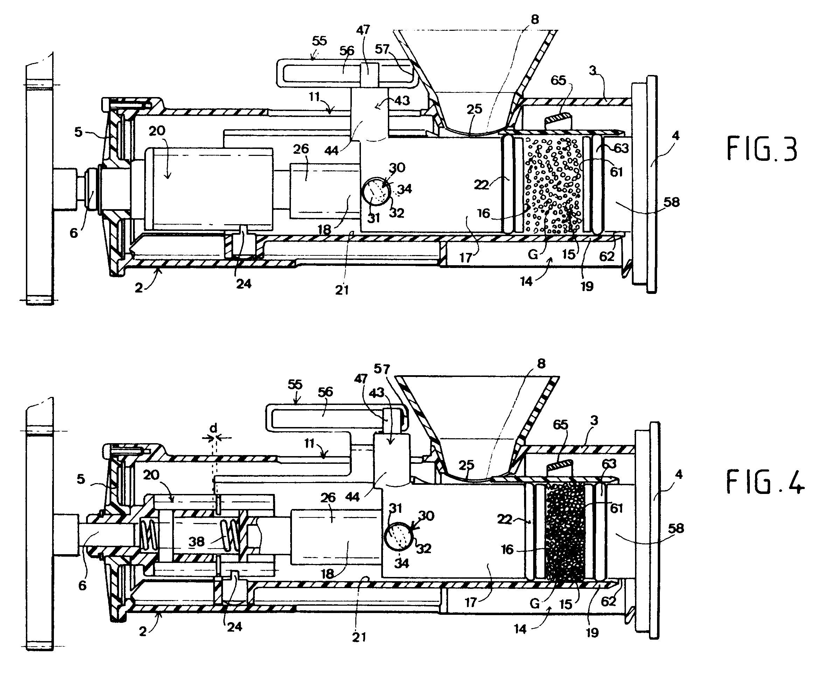

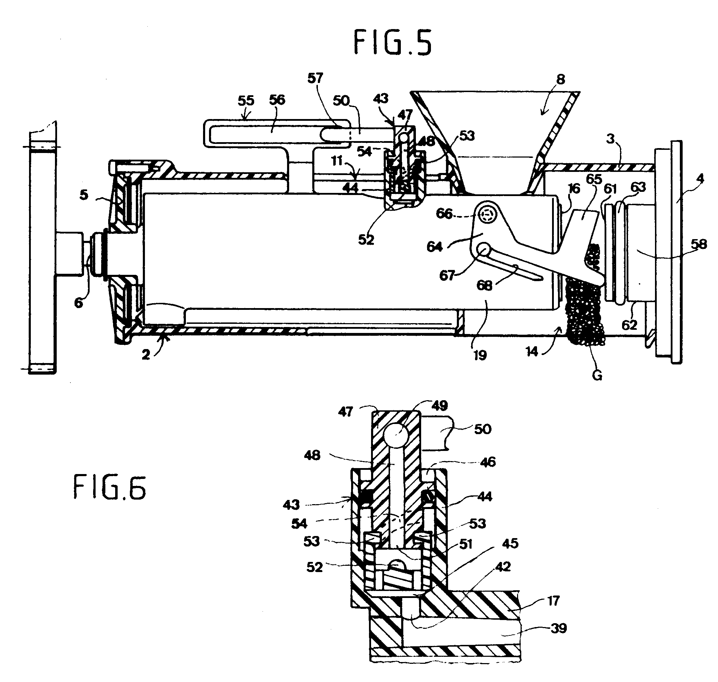

- la Figure 1 représente une vue en coupe verticale d'une machine à café selon l'invention illustrant notamment un cylindre d'infusion comportant un piston en position de repos et une chemise en position de remplissage ; la figure 2 est une vue analogue à la figure 1 dans laquelle les moyens d'entraînement en translation du piston et le dispositif d'actionnement de la chemise sont représentés en élévation ; la figure 3 est une vue analogue à la figure 2 dans laquelle le piston est représenté en élévation, et illustrant le piston en position de tassage intermédiaire et la chemise en position de remplissage ; la figure 4 est une vue analogue à la figure 3 dans laquelle le dispositif d'actionnement de la chemise est représenté en coupe, et illustrant le piston en position d'éjection ; la figure 5 est une vue analogue à la figure 4 dans laquelle la chemise est représentée en élévation, et illustre, lorsque la chemise est en position d'éjection et le piston en position de tassage, des moyens d'expulsion du marc ; la Figure 6 est une vue en coupe de l'obturateur coupant son état ouvert.

La machine à café automatique telle que représentée sur les figures 1 à 5 comporte, dans un boîtier 1 (schématisé en traits interrompus sur les figures 1 et 2), un corps fixe 2 qui comporte un cylindre 3 fermé, d'une part, par un couvercle 4 et, d'autre part, par un embout 5 traversé par un arbre rotatif 6 relié à des moyens motorisés 7 (schématisés en traits interrompus sur les figures 1 et 2). Des ouvertures sont pratiquées dans le corps 2 : une ouverture 8 de passage de la mouture destinée à l'introduction d'une quantité de mouture de café M par un distributeur de mouture 9 connu en soi (représenté sur les Figures 1 et 2) associé à un réservoir 10, une ouverture 11 d'alimentation en liquide destinée à introduire une quantité d'eau chaude provenant d'un chauffe-eau 12 (schématisé en traits interrompus sur les figures 1 et 2), un passage 13 d'évacuation d'infusion, et une ouverture 14 d'éjection du marc G. Le cylindre 3 est aménagé de manière à renfermer une chambre d'infusion cylindrique 15 limitée à ses extrémités, d'une part, par le couvercle 4 et, d'autre part, par la face frontale 16 d'un piston 17 qui est monté coulissant dans le cylindre 3 grâce à des moyens 18 d'entraînement en translation solidaires en rotation dudit arbre 6.

Selon l'invention, une chemise tubulaire 19 est montée coulissante à l'intérieur du cylindre 3 au moyen d'un dispositif d'actionnement 20 relié à l'arbre 6, le piston 17 étant lui-même monté coulissant dans la chemise 19, de manière que la paroi latérale de la chemise 19 limite la chambre d'infusion 15 à sa périphérie. Un joint d'étanchéité annulaire 22 est disposé entre le piston 17 et la chemise 19. Le dispositif d'actionnement 20 de la chemise 19 comporte une came de révolution 23, constituée par une rainure hélicoïdale dans laquelle vient se loger un doigt 24 solidaire de la chemise 19. La chemise 19 comporte une lumière 25 pratiquée dans sa paroi latérale.

Comme on le voit mieux sur la figure 2, les moyens 18 d'entraînement en translation du piston comportent une vis à double filet 26 montée rotative dans le corps 2 et dont l'axe est parallèle à la direction de déplacement du piston 17, ladite vis 26 comportant au moins deux chemins hélicoïdaux 27, 28, un chemin dit de poussée 27 et un chemin dit de retrait 28, qui s'enroulent en sens inverse l'un de l'autre et se raccordent par des arrondis 29 à leurs extrémités respectives de manière à constituer ensemble un parcours sans fin pour un sabot 30 qui est monté mobile dans le piston 17.
Le sabot 30 comporte deux parties, une partie cylindrique 31 montée rotative dans un orifice correspondant 32 (figures 3 et 4) de la paroi latérale 33 du piston 17 et une partie ovalisée 34 à bouts arrondis destinée à venir se déplacer dans un des chemins 27, 28. Dans l'exemple de réalisation décrit, on choisit de préférence quatre chemins hélicoïdaux, soit deux chemins de poussée 27 et deux chemins de retrait 28, et deux sabots 30, agencés de part et d'autre de la paroi latérale 33 du piston 17 et destinés à venir respectivement chacun dans un chemin de poussée 27 ou de retrait 28. Les chemins de poussée 27 et de retrait 28 ont de préférence le même pas.

Le piston 17 peut occuper au moins deux positions, soit une position de repos (figure 1 et 2) pour laquelle le piston 17 est en retrait de l'ouverture 8 de passage de mouture, autorisant l'écoulement de ladite mouture M dans la chambre 15, soit une position de tassage (figures 4 et 5) pour laquelle l'ouverture 8 de passage de la mouture étant fermée, le piston 17 tasse la mouture M contre le couvercle 4 au dessus de l'ouverture 14 d'éjection. La rotation continue de la vis 26 dans un même sens provoque un déplacement du piston 17 alternativement d'une position vers l'autre.

En effet, quand la vis 26 tourne, chaque sabot 30 parcourt d'abord le chemin de poussée 27 correspondant, amenant le piston 17 de sa position de repos (figures 1 et 2) à sa position de tassage (figures 4 et 5), puis emprunte un arrondi 29, pivote dans l'orifice 32 de la paroi latérale 33 du piston 17, et emprunte alors le chemin de retrait 28 correspondant, ce qui provoque le passage du piston 17 de sa position de tassage (figures 4 et 5) à sa position de repos (figures 1 et 2).
La chemise 19 peut occuper deux positions, soit une position de remplissage (figures 1, 2, 3 et 4) en laquelle la chemise 19 vient en butée contre une partie du couvercle 4 et ferme l'ouverture 14 d'éjection du marc, faisant coïncider la lumière 25 avec l'ouverture 8 de passage de la mouture, et pour laquelle le piston 17 passe de sa position de repos (figures 1 et 2) à sa position de tassage (figure 4), soit une position d'éjection (figure 5) en laquelle la chemise 19 ferme l'ouverture 8 de passage de la mouture, laissant libre l'ouverture 14 d'éjection du marc, et pour laquelle après l'éjection du marc G, le piston 17 passe de sa position de tassage (figure 5) à sa position de repos. La rotation continue de la came 23 dans un même sens provoque un déplacement de la chemise 19 alternativement d'une position vers l'autre.

Les différentes positions de la chemise et du piston sont définies les unes par rapport aux autres par un sélecteur 35 (schématisé en traits interrompus sur les figures 1 et 2) du nombre de tours de rotation de l'arbre rotatif 6. Le sélecteur 35 peut être de préférence un dispositif électronique de commande des moyens motorisés connu en soi, comportant un compte-tours et commandant accessoirement le distributeur de mouture 9 et le chauffe-eau 12.

Tel que représenté sur la figure 3, le piston 17 peut, en outre, occuper une position de tassage intermédiaire entre la position de repos et la position de tassage pour laquelle le piston 17 tasse partiellement la mouture M au dessus de l'ouverture 14 d'éjection du marc, de manière à obtenir une pression dans la chambre d'infusion 15 plus faible que pour la position de tassage normale.

Cette position est définie par le sélecteur 35 qui arrête la rotation de l'arbre 6 avant que le piston 17 soit en bout de course (position de tassage).

Ainsi l'utilisateur peut au choix confectionner à partir d'une même quantité de mouture M, soit un café du type "espresso", soit un café du type "long".
Pour un café "long", le sélecteur 35 par l'intermédiaire de l'arbre 6 amène le piston 17 en sa position intermédiaire, ce qui permet d'obtenir une pression faible dans la chambre d'infusion 15, puis le piston 17 continue sa translation pour occuper sa position de tassage, il y a alors essorage de la galette de marc G, de manière à extraire tout l'arôme du café.
Pour un café "espresso", le sélecteur 35 fait avancer le piston 17 directement en sa position de tassage, la pression dans la chambre d'infusion 15 est alors élevée de manière à produire de la mousse sur l'infusion.

Comme on le voit mieux sur la figure 2, le dispositif d'actionnement 20 de la chemise 19 comporte deux parties, soit une partie 36 où le pas de la rainure 23 est faible de manière que la chemise 19 passe progressivement de sa position d'éjection à sa position de remplissage, soit une autre partie 37 où le pas de la rainure 23 est important de manière que la chemise 19 passe rapidement de sa position d'éjection à sa position de remplissage.

Comme on le voit mieux sur les figures 1 et 4, le dispositif d'actionnement 20 de la chemise 19 et les moyens d'entraînement en translation 18 du piston 17 sont constitués de deux pièces distinctes, solidaires en rotation l'une de l'autre au moyen d'un organe élastique 38, de préférence du type ressort à boudin, interposé entre l'arbre 6 et les moyens d'entraînement en translation 18 du piston 17, de manière à permettre en position de tassage un très léger déplacement d du piston 17 vers sa position de repos quand le volume de mouture M est trop important dans la chambre d'infusion 15.

En cas d'une introduction d'un volume de mouture M supérieure au volume normal, le ressort 38 permet un léger recul d de la vis 26 et du piston 17 et donc le volume de la chambre d'infusion 15 augmente légèrement. Ainsi le ressort 38 rattrape la différence de volume.
De plus, le ressort 38 permet après l'infusion d'essorer légèrement le marc G en faisant avancer légèrement le piston 17, et compense ainsi la différence de volume existant entre la mouture M et le marc G.

Tel que représenté sur les figures 1 et 5 et en particulier sur la Figure 6, le piston 17 comporte un canal longitudinal 39 d'alimentation en liquide dont la sortie 40 débouche par la face frontale 16 du piston 17 et est équipé d'un filtre 41, et dont l'entrée 42 est reliée au chauffe-eau 12. L'entrée 42 comporte un obturateur de sécurité 43, dont l'état dépend de la position relative du piston 17 par rapport à la chemise 19 de manière à occuper, soit un état "fermé" pour lequel il ferme l'entrée 42 (figure (5) quand la chemise 19 occupe sa position d'éjection et le piston 17 sa position de tassage, soit un état "ouvert" pour lequel il libère ladite entrée 42 (Figures 1 et 6) quand la chemise 19 occupe sa position de remplissage et le piston 17 sa position de repos.

L'obturateur 43 est porté par le piston 17 et comporte une boite tubulaire 44 traversant la paroi latérale 21 de la chemise 19 et dont le fond 45 présente l'entrée 42 du canal 39 et dont l'autre extrémité 46 est fermée par un bouchon 47. Le bouchon 47 présente un conduit central 48 dont l'entrée 49 est reliée à l'extrémité d'un tube d'arrivée d'eau 50 et dont le débouché 51 est situé en regard d'un pointeau 52 mobile en translation. Le pointeau 52 présente à cet effet au moins une griffe 53 qui vient en prise avec une rampe hélicoïdale 54 pratiquée sur le bouchon 47. Ledit tube 50 est relié par son autre extrémité à un organe 55 de commande en rotation solidaire de la paroi latérale 21 de la chemise 19 de manière que la rotation du bouchon 47 soit provoquée par le déplacement relatif de la chemise 19 par rapport au piston 17.

L'organe 55 de commande en rotation est constitué par une excroissance de la paroi latérale de la chemise 19 et qui comporte un trou allongé 56 dans la direction de translation de la chemise 19 et de longueur sensiblement équivalente à la course du piston 19. Le tube d'arrivée d'eau 50 traverse avec un certain jeu le trou allongé 56. Quand la chemise 19 occupe sa position de remplissage et le piston sa position de repos (figure 1), le tube d'arrivée d'eau 50 est sensiblement perpendiculaire au trou allongé 56, le pointeau 52 est en retrait du débouché 51 du conduit 48. Quand le piston 17 passe en position de tassage (figure 4) ce qui correspond à une course d'environ 40 millimètres, l'obturateur 43 suit le mouvement mais le tube 50 reste perpendiculaire au trou 56, il arrive en butée contre le bord 57 du trou allongé 56. Quand la chemise 19 passe en position d'éjection (figure 5), ce qui correspond à une course supplémentaire d'environ 40 millimètres, le tube 50 étant en butée contre le bord 57, fait tourner le bouchon 47 d'environ 45 degrés. La griffe 53 du pointeau 52 monte dans la rainure 54 du bouchon 47, ce qui provoque la translation du pointeau 52 vers le débouché 51 du conduit 48 qu'il ferme.

Comme on le voit plus particulièrement sur la figure 1, le couvercle 4 est monté de manière amovible sur le cylindre 3 et présente un bossage cylindrique central 58 de diamètre légèrement inférieur à celui de la chemise 19, bossage 58 qui comporte le passage 13 d'évacuation d'infusion dont l'embouchure 59 est équipée d'un filtre 60 porté par la face frontale 61 du bossage 58, et qui comporte sur sa surface latérale 62 un joint annulaire d'étanchéité 63 de manière à rendre la chambre d'infusion 15 étanche entre la chemise 19 et le couvercle 4 quand la chemise 19 occupe sa position de remplissage.

L'amovibilité permet à l'usager de nettoyer efficacement la chambre d'infusion 15 et les filtres 60 et 41.

Comme on le voit sur les figures 1 et 5, des moyens d'expulsion 64 sont associés à la chemise 19 et comportent une raclette 65 montée pivotante autour d'un axe fixe 66 transversal et solidaire du corps 2 grâce à des moyens 67, 68 de coopération mutuelle avec la chemise. Les moyens de coopération sont constitués par au moins un ergot 67, mais de préférence deux ergots disposés sur la chemise 19 symétriquement l'un par rapport à l'autre et destinés chacun à venir dans un guide 68 correspondant de la raclette 65.

La raclette 65 peut occuper deux positions, soit une position inactive (figure 1) en laquelle elle est amenée quand la chemise 19 occupe sa position de remplissage et pour laquelle elle est tenue à l'écart de la chambre d'infusion 15, soit une position active (figure 5) en laquelle elle est amenée quand la chemise 19 occupe sa position d'éjection (figure 2) et pour laquelle elle appuie et balaye le marc G selon un mouvement transversal à la chemise de manière à le faire passer au travers de l'ouverture 14 d'éjection du marc.

La chemise 19, le piston 17, le couvercle 4, la vis 26 et la came 23 sont de préférence réalisés en matière plastique, ce qui présente l'avantage de pouvoir les fabriquer en grande série à moindre coût.

Selon l'invention, le fonctionnement de la machine à café s'établit selon le cycle d'infusion suivant :
- Dans une étape initiale (figure 1), la chemise 19 occupe sa position de remplissage et le piston 17 sa position de repos. L'obturateur 43 est dans son état "ouvert". Les moyens d'expulsion 64 occupent leur position inactive. On a représenté, au dessus de l'ouverture 8 de passage de la mouture, le distributeur de mouture 9 qui comporte, par exemple, une palette 69 qui est reliée aux moyens motorisés 7.
- Dans une étape de remplissage (figure 2) le distributeur de mouture 9 verse une dose de mouture M au travers de l'ouverture 8 de passage de la mouture et de la lumière 25 de la chemise 19, dans la chambre d'infusion 15.
- Dans une étape de tassage intermédiaire (figure 3), l'arbre 6 entraîne en rotation la vis 26 du piston 17, qui se déplace vers sa position de tassage intermédiaire. La chambre d'infusion 15 est alors rendue étanche par les joints 22 et 63 situés, d'une part entre le piston 17 et la chemise 19 et, d'autre part, entre le bossage 58 du couvercle 4 et la chemise 19. Dans le cas où l'utilisateur désirerait un café "long", l'eau chaude provenant du chauffe-eau 12 commandé par le sélecteur 35 est introduite dans la chambre d'infusion 15 par le canal d'alimentation 39 du piston 17.
- Dans une étape de tassage (figure 4), l'arbre 6 continue d'entraîner en rotation la vis 26 du piston 17 qui se déplace vers sa position de tassage.
   On envisage alors deux cas :
   Dans le cas où l'utilisateur voulait un café "long", le marc G est essoré par le piston de manière à extraire toute l'infusion présente dans le marc G après l'infusion qui s'est produite en tassage intermédiaire.
   Dans le cas où l'utilisateur désirait un café "espresso", la mouture M est tassée puis l'eau chaude en provenance du chauffe-eau 12 est injectée par le canal d'alimentation 39 du piston 17. Après infusion, le marc M est légèrement essoré par l'intermédiaire du ressort 38.
   Dans les deux cas, l'infusion est évacuée par le passage 13 d'évacuation d'infusion.
   Simultanément, l'arbre 6 entraîne en rotation le dispositif d'actionnement 20 de la chemise 19, qui grâce au pas faible de la première partie 36 du dispositif 20 recule très lentement vers sa position de remplissage.
- Dans une étape d'éjection (figure 5), grâce au pas élevé de la deuxième partie 37 du dispositif d'actionnement 20 de la chemise 19, la chemise recule rapidement vers sa position de remplissage.
   En reculant, la chemise fait pivoter le tube d'arrivée d'eau 50 et le bouton 47, qui amène l'obturateur 43 en position active, ainsi l'eau chaude ou la vapeur ne peuvent ni sortir par le canal d'alimentation en liquide 39 ni remonter de la chambre d'infusion 15 vers le chauffe-eau 12 alors que la chambre d'infusion 15 n'est plus étanche.
   Simultanément, la chemise 19 entraîne les moyens d'expulsion 64 en leur position active, la raclette pivotante 65 appuyant sur la galette de marc G de manière à l'éjecter au travers de l'ouverture 14 d'éjection du marc.
- Dans une étape de retour à l'étape initiale, l'arbre 6 continue ensuite d'entraîner en rotation la vis 26 du piston 17, qui recule vers sa position de repos. Simultanément, l'arbre 6 continue d'entraîner en rotation le dispositif 20 d'actionnement de la chemise 19, faisant reculer la chemise vers sa position de remplissage.

## Revendications

1. Machine à café automatique comportant, dans un boîtier (1), un corps fixe (2) qui comporte un cylindre (3) fermé, d'une part, par un couvercle (4) et, d'autre part, par un embout (5) traversé par un arbre rotatif (6) relié à des moyens motorisés (7), et dans lequel cylindre sont pratiquées des ouvertures, une ouverture (8) de passage de la mouture destinée à l'introduction d'une quantité de mouture de café (M), une ouverture (11) d'alimentation en liquide destinée à introduire une quantité d'eau chaude provenant d'un chauffe-eau (12) , un passage (13) d'évacuation d'infusion, et une ouverture (14) d'éjection du marc, ledit cylindre (3) étant aménagé de manière à renfermer une chambre d'infusion cylindrique (15) limitée à ses extrémités, d'une part, par le couvercle (4) et, d'autre part, par la face frontale (16) d'un piston (17) qui est monté coulissant dans le cylindre (4) grâce à des moyens (18) d'entraînement en translation solidaires en rotation dudit arbre (6) , et qui peut occuper au moins deux positions, soit une position de repos pour laquelle le piston (17) est en retrait de l'ouverture (8) de passage de mouture, autorisant l'écoulement de ladite mouture (M) dans la chambre(15), soit une position de tassage,
**caractérisée en ce qu**' une chemise tubulaire (19) est montée coulissante à l'intérieur du cylindre (3) au moyen d'un dispositif d'actionnement (20) relié à l'arbre (6), le piston (17) étant lui-même monté coulissant dans la chemise (19), et comporte une lumière (25) pratiquée dans sa paroi latérale, la chemise (19) pouvant occuper deux positions, soit une position de remplissage en laquelle la chemise (19) vient en butée contre le couvercle (4) et ferme l'ouverture (14) d'éjection du marc, faisant coïncider la lumière (25) avec l'ouverture (8) de passage de la mouture, et pour laquelle le piston (17) passe de sa position de repos à sa position de tassage pour laquelle l'ouverture (8) de passage de la mouture étant fermée, le piston (17) tasse la mouture (M) au dessus de l'ouverture (14) d'éjection contre le couvercle (4), soit une position d'éjection en laquelle la chemise (19) ferme l'ouverture (8) de passage de la mouture, laissant libre l'ouverture (14) d'éjection du marc, et pour laquelle après l'éjection du marc, le piston (17) passe de sa position de tassage à sa position de repos, les différentes positions étant définies les unes par rapport aux autres par un sélecteur (35) du nombre de tours de rotation de l'arbre rotatif (6).

2. Machine à café selon la revendication 1,
**caractérisée en ce que** le piston (17) peut, en outre, occuper une position de tassage intermédiaire entre la position de repos et la position de tassage pour laquelle le piston (17) tasse partiellement la mouture (M) au dessus de l'ouverture (14) d'éjection du marc, de manière à obtenir une pression dans la chambre d'infusion (15) plus faible que pour la position de tassage normale.

3. Machine à café selon la revendication 1 ou 2,
**caractérisée en ce que** les moyens (18) d'entraînement en translation du piston comportent une vis (26) à double filet montée rotative dans le corps (2) et dont l'axe est parallèle à la direction de déplacement du piston (17), ladite vis (26) comportant au moins deux chemins hélicoïdaux (27, 28), un chemin dit de poussée (27) et un chemin dit de retrait (28), qui s'enroulent en sens inverse l'un de l'autre et se raccordent par des arrondis (29) à leurs extrémités respectives de manière à constituer ensemble un parcours sans fin pour un sabot (30) qui est monté mobile dans le piston (17), de telle sorte que la rotation continue de la vis (26) dans un même sens provoque un déplacement du piston (17) alternativement d'une position vers l'autre.

4. Machine à café selon l'une quelconque des revendications 1 à 3,
**caractérisée en ce que** le dispositif d'actionnement (20) de la chemise (19) comporte une came de révolution (23) constituée par une rainure hélicoïdale dans laquelle vient se loger un doigt (24) solidaire de la chemise (19) de manière que la rotation continue de la came (23) dans un même sens provoque un déplacement de la chemise (19) alternativement d'une position vers l'autre.

5. Machine à café selon la revendication 4,
**caractérisée en ce que** le dispositif d'actionnement (20) de la chemise (19) comporte deux parties (36-37), soit une partie (36) où le pas de la rainure (23) est faible de manière que la chemise (19) passe progressivement de sa position d'éjection à sa position de remplissage, soit une autre partie (37) où le pas de la rainure est important de manière que la chemise (19) passe rapidement de sa position d'éjection à sa position de remplissage.

6. Machine à café selon l'une quelconque des revendications 1 à 5,
**caractérisée en ce que** le piston (19) comporte un canal (39) d'alimentation en liquide dont la sortie (40) débouche par la face frontale (16) du piston et est équipé d'un filtre (41), et dont l'entrée (42) est reliée au chauffe-eau (12) et comporte un obturateur (43) de sécurité dont l'état dépend de la position relative du piston (17) par rapport à la chemise (19) de manière à occuper, soit un état "fermé" pour lequel il ferme ladite entrée (42) quand la chemise (19) occupe sa position d'éjection et le piston (17) sa position de tassage, soit un état "ouvert" pour lequel il libère ladite entrée (42) quand la chemise (19) occupe sa position de remplissage et le piston (17) sa position de repos.

7. Machine à café selon la revendication 6,
**caractérisée en ce que** l'obturateur (43) est porté par le piston (17) et comporte une boîte tubulaire (44) traversant la paroi latérale de la chemise (19) et dont le fond (45) présente l'entrée (42) du canal (39) et dont l'autre extrémité est fermée par un bouchon (47) présentant un conduit central (48) dont l'entrée (49) est reliée à l'extrémité d'un tube d'arrivée d'eau (50) et dont le débouché (51) est situé en regard d'un pointeau (52) mobile en translation et présentant à cet effet une griffe (53) qui vient en prise avec une rampe hélicoïdale (54) pratiquée sur le bouchon (47), ledit tube (50) étant relié par son autre extrémité à un organe (55) de commande en rotation solidaire de la paroi latérale de la chemise (19) de manière que la rotation du bouchon (47) soit provoquée par le déplacement relatif de la chemise (19) par rapport au piston (17).

8. Machine à café selon l'une quelconque des revendications précédentes,
**caractérisée en ce que** le couvercle (4) est monté de manière amovible sur le cylindre (3) et présente un bossage (58) cylindrique central de diamètre légèrement inférieur à celui de la chemise (19), bossage (58) qui comporte le passage (13) d'évacuation d'infusion dont l'embouchure (59) est équipée d'un filtre (60) porté par la face frontale (61) du bossage (59), et qui comporte sur sa surface latérale (62) un joint d'étanchéité (63) de manière à rendre la chambre d'infusion (15) étanche entre la chemise (19) et le couvercle (4) quand la chemise (19) occupe sa position de remplissage.

9. Machine à café selon l'une quelconque des revendications précédentes,
**caractérisée en ce que**, le dispositif d'actionnement (20) de la chemise (19) et les moyens (18) d'entraînement en translation du piston (17) sont constitués de deux pièces distinctes, solidaires en rotation l'une de l'autre au moyen d'un organe élastique (38) interposé entre l'arbre (6) et les moyens (18) d'entraînement en translation du piston (17), de manière à permettre en position de tassage un très léger déplacement (d) du piston (17) vers sa position de repos quand le volume de mouture (M) est trop important dans la chambre d'infusion (15).

10. Machine à café selon l'une quelconque des revendications précédentes,
**caractérisé en ce que** des moyens d'expulsion (64) sont associés à la chemise (19) et comportent une raclette (65) montée pivotante autour d'un axe fixe (66) transversal au corps (2) grâce à des moyens (67, 68) de coopération mutuelle avec la chemise (19), de manière à occuper deux positions, soit une position inactive en laquelle elle est amenée quand la chemise (19) occupe sa position de remplissage et pour laquelle elle est tenue à l'écart de la chambre d'infusion (15), soit une position active en laquelle elle est amenée quand la chemise (19) occupe sa position d'éjection et pour laquelle elle appuie et balaye selon un mouvement transversal à la chemise (19) le marc (G) de manière à le faire passer au travers de l'ouverture (14) d'éjection du marc.

## Claims

1. Automatic coffee machine including, in a housing (1), a fixed body (2) which includes a cylinder (3) closed off, on the one hand, by a cover (4) and, on the other hand, by an end piece (5) through which passes a rotary shaft (6) connected to motorised means (7), and in which cylinder are formed openings, a ground coffee feed opening (8), intended for the introduction of a quantity of ground coffee (M), a liquid feed opening (11) intended to introduce a quantity of hot water coming from a water heater (12), an infusion discharge passage (13), and an opening (14) for ejecting the grounds, the said cylinder (3) being arranged so as to enclose a cylindrical infusion chamber (15) delimited at its ends, on the one hand, by the cover (4) and, on the other hand, by the front face (16) of the piston (17) which is slidably mounted in the cylinder (4) by means of means (18) for driving in translation which are fixed to the said shaft (6) with respect to rotation, and which is able to occupy at least two positions, either an idle position in which the piston (17) is withdrawn from the ground coffee feed opening (8), allowing the said ground coffee (M) to flow into the chamber (15), or a compacting position, characterised in that a tubular jacket (19) is slidably mounted inside the cylinder (3) by means of an actuating device (20) connected to the shaft (6), the piston (17) being itself slidably mounted in the jacket (19), and has an aperture (25) formed in its lateral wall, the jacket (19) being able to occupy two positions, either a filling position in which the jacket (19) comes into abutment against the cover (4) and closes off the grounds ejection opening (14), causing the aperture (25) to coincide with the ground coffee feed opening (8), and in which the piston (17) moves from its idle position to its compacting position, in which, the ground coffee feed opening (8) being closed, the piston (17) compacts the ground coffee (M) above the ejection opening (14) against the cover (4), or an ejection position in which the jacket (19) closes off the ground coffee feed opening (8), leaving the grounds ejection opening (14) clear, and in which, after the ejection of the grounds, the piston (17) moves from its compacting position to its idle position, the different positions being defined with respect to each other by a device (35) for selecting the number of turns of the rotary shaft (6).

2. Coffee machine according to Claim 1, characterised in that the piston (17) is also able to occupy a compacting position intermediate between the idle position and the compacting position, in which the piston (17) partially compacts the ground coffee (M) above the grounds ejection opening (14), so as to obtain a pressure in the infusion chamber (15) which is lower than with the normal compacting position.

3. Coffee machine according to Claim 1 or 2, characterised in that the means (18) for driving the piston in translation include a double-threaded screw (26) rotatably mounted in the body (2) and the axis of which is parallel to the direction of movement of the piston (17), the said screw (26) having at least two helical tracks (27, 28), a track referred to as the thrust track (27) and a track referred to as the withdrawal track (28), which wind in opposite directions to each other and are connected to each other by rounded parts (29) at their respective ends so as to constitute together an endless path for a shoe (30) which is movably mounted in the piston (17), so that the continuous rotation of the screw (26) in the same direction causes a movement of the piston (17) in alternation from one position to the other.

4. Coffee machine according to any one of Claims 1 to 3, characterised in that the device (20) for actuating the jacket (19) includes a rotary cam (23), consisting of a helical groove in which is housed a pin (24) fixed to the jacket (19) so that the continuous rotation of the cam (23) in the same direction causes a movement of the jacket (19) in alternation from one position to the other.

5. Coffee machine according to Claim 4, characterised in that the device (20) for actuating the jacket (19) has two parts (36-37), namely a part (36) where the pitch of the groove (23) is low so that the jacket (19) moves progressively from its ejection position to its filling position, and another part (37) where the pitch of the groove (26) is high so that the jacket (19) moves rapidly from its ejection position to its filling position.

6. Coffee machine according to any one of Claims 1 to 5, characterised in that the piston (19) includes a liquid-feed channel (39), the outlet (40) of which opens out through the front face (16) of the piston and is fitted with a filter (41), and the inlet (42) of which is connected to the water heater (12) and has a safety obturator (43), the state of which depends on the relative position of the piston (17) with respect to the jacket (19) so as to occupy either a "closed" state in which it closes off the inlet (42) when the jacket (19) occupies its ejection position and the piston (17) its compacting position, or an "open" state in which it leaves the said inlet (42) clear when the jacket (19) occupies its filling position and the piston (17) its idle position.

7. Coffee machine according to Claim 6, characterised in that the obturator (43) is carried by the piston (17) and includes a tubular chamber (44) passing through the lateral wall of the jacket (19) and the end (45) of which has the inlet (42) to the channel (39) and the other end of which is closed off by a plug (47) having a central pipe (48), the inlet (49) of which is connected to the end of a water inlet tube (50) and the outlet (51) of which is situated opposite a valve (52) which is able to move in translation and has for this purpose at least one claw (53) which engages with a helical slope (54) formed on the plug (47), the said tube (50) being connected by its other end to a rotational control device (55) fixed to the lateral wall of the jacket (19), so that the rotation of the plug (47) is brought about by the relative movement of the jacket (19) with respect to the piston (17).

8. Coffee machine according to any one of the preceding claims, characterised in that the cover (4) is removably mounted on the cylinder (3) and has a central cylindrical protrusion (58) of a diameter slightly less than that of the jacket (19), the said protrusion (58) including the infusion discharge passage (13), the outlet (59) of which is fitted with a filter (60) carried by the front face (61) of the protrusion (58), and having on its lateral surface (62) a sealing joint (63) so as to render the infusion chamber (15) watertight between the jacket (19) and cover (4) when the jacket (19) occupies its filling position.

9. Coffee machine according to any one of the preceding claims, characterised in that the device (20) for actuating the jacket (19) and the means (18) for driving the piston (17) in translation consist of two separate parts, fixed to each other with respect to rotation by means of a resilient member (38) interposed between the shaft (6) and the means (18) for driving the piston (17) in translation, so as to allow, in the compacting position, a very slight movement (d) of the piston (17) towards its idle position when the volume of ground coffee (M) is too great in the infusion chamber (15).

10. Coffee machine according to any one of the preceding claims, characterised in that expulsion means (64) are associated with the jacket (19) and include a scraper (65) mounted so as to pivot about a fixed shaft (66) transverse to the body (2) by virtue of means (67, 68) of mutual cooperation with the jacket (19), so as to occupy two positions, either an inactive position into which it is brought when the jacket (19) occupies its filling position and in which it is held away from the infusion chamber (15), or an active position into which it is brought when the jacket (19) occupies its ejection position and in which it supports and sweeps the grounds (G) in a movement transverse to the jacket (19) so as to cause it to pass through the grounds ejection opening (14).

## Patentansprüche

1. Automatische Kaffeemaschine, die in einem Gehäuse (1) einen festgelegten Körper (2) aufweist, der einen einerseits durch einen Deckel (4) und andererseits durch einen von einer Drehwelle (6), die mit Motormitteln (7) verbunden ist, durchsetzten Ansatz (5) geschlossenen Zylinder (3) aufweist, in dem Öffnungen vorgesehen sind, eine Durchgangsöffnung (8) für das Mahlgut, die zum Einführen einer Kaffeemahlgutmenge (M) bestimmt ist, eine Öffnung (11) zur Flüssigkeitsversorgung, die zum Einführen einer Heißwassermenge bestimmt ist, die von einem Wassererhitzer (12) stammt, ein Durchgang (13) zur Evakuierung des Aufgusses sowie eine Öffnung (14) zum Ausbringen des Kaffeesatzes, wobei der Zylinder (3) so angeordnet ist, daß er eine zylindrische Aufgußkammer (15) umschließt, die an ihren Enden einerseits durch den Deckel (4) und andererseits durch die Stirnseite (16) eines Kolbens (17) begrenzt ist, der dank mit der Welle (6) drehfest verbundener Verschiebungsantriebsmittel (18) in dem Zylinder (4) gleitend gelagert ist und wenigstens zwei Positionen, nämlich eine Ruhestellung, in der der Kolben (17) von der Mahlgutdurchgangsöffnung (8) zurückgezogen ist, womit das Auslaufen des Mahlguts (M) in die Kammer (15) zugelassen ist, oder eine Verdichtungsposition einnehmen kann,
**dadurch gekennzeichnet, daß** eine rohrförmige Einlage (19) im Inneren des Zylinders (3) mittels einer mit der Welle (6) verbundenen Betätigungseinrichtung (20) gleitend gelagert ist, wobei der Kolben (17) seinerseits in der Einlage (19) gleitend gelagert ist und ein in seiner Seitenwand vorgesehenes Schlitzloch (25) aufweist, wobei die Einlage (19) zwei Positionen, entweder eine Füllposition, in der die Einlage (19) in Anlage gegen den Deckel (4) gelangt und die Öffnung (14) zum Ausbringen des Kaffeesatzes verschließt, wobei das Schlitzloch (15) mit der Durchgangsöffnung (8) für das Mahlgut zusammenfällt, und in der der Kolben (17) aus seiner Ruheposition in seine Verdichterposition übergeht, bei der die Durchgangsöffnung (8) für das Mahlgut verschlossen wird, der Kolben (17) das Mahlgut (M) über der Ausbringöffnung (14) gegen den Deckel (4) verdichtet, oder eine Ausbringposition einnehmen kann, in der die Einlage (19) die Durchgangsöffnung (8) für das Mahlgut verschließt, wobei die Öffnung (14) zum Ausbringen des Kaffeesatzes freigelassen wird, und in der der Kolben (17) nach dem Ausbringen des Kaffesatzes von seiner Verdichterposition in seine Ruheposition übergeht, wobei die verschiedenen Positionen zueinander durch einen Wählschalter (35) für die Zahl der Umdrehungen der Drehwelle (6) definiert ist.

2. Kaffeemaschine nach Anspruch 1,
**dadurch gekennzeichnet, daß** der Kolben (17) ferner zwischen der Ruheposition und der Verdichterposition eine Zwischenverdichterposition einnehmen, in der der Kolben (17) das Mahlgut (M) über der Öffnung (14) zum Ausbringen des Kaffeesatzes teilweise verdichtet, um in der Aufgußkammer (15) einen niedrigeren Druck als für die normale Verdichterposition zu erhalten.

3. Kaffeemaschine nach Anspruch 1 oder 2,
**dadurch gekennzeichnet, daß** die Verschiebungsantriebsmittel (18) für den Kolben eine Doppelgewindeschraube (26) aufweisen, die in dem Körper (2) drehbar gelagert ist und deren Achse parallel zu der Verschiebungsrichtung des Kolbens (17) liegt, wobei die Schraube (26) wenigstens zwei schraubenförmige Wege (27, 28) aufweist, einen sogenannten Schubweg (27) und einen sogenannten Rückzugsweg (28), die in zueinander entgegengesetzter Richtung ineinander verschlungen sind und an ihren jeweiligen Enden durch Abrundungen (29) miteinander derart verbunden sind, daß sie zusammen eine Endlosstrecke für einen Schuh (30) bilden, der in dem Kolben (17) derart beweglich gelagert ist, daß die kontinuierliche Drehung der Schraube (26) in ein und derselben Richtung eine Verschiebung des Kolbens (17) abwechselnd von einer Position zur anderen bewirkt.

4. Kaffeemaschine nach einem der Ansprüche 1 bis 3,
**dadurch gekennzeichnet, daß** die Betätigungseinrichtung (20) für die Einlage (19) eine aus einer schraubenförmigen Nut gebildete Drehsteuerkurve (23) aufweist, in der ein mit der Einlage (19) fest verbundener Finger (24) derart aufgenommen ist, daß die kontinuierliche Drehung der Steuerkurve (23) in ein und derselben Richtung eine Verschiebung der Einlage (19) abwechselnd von einer Position zur anderen bewirkt.

5. Kaffeemaschine nach Anspruch 4,
**dadurch gekennzeichnet, daß** die Betätigungseinrichtung (20) für die Einlage (19) zwei Teile (36-37), nämlich einen Teil (36), in dem der Schritt der Nut (23) klein ist, so daß die Einlage (19) fortschreitend aus ihrer Ausbringposition in ihre Füllposition übergeht, oder einen anderen Teil (37), wo der Schritt der Nut so hoch ist, daß die Einlage (19) rasch aus ihrer Ausbringposition in die Füllposition übergeht.

6. Kaffeemaschine nach einem der Ansprüche 1 bis 5,
**dadurch gekennzeichnet, daß** der Kolben (17) einen Längskanal (39) zur Flüssigkeitsversorgung aufweist, dessen Ausgang (40) über die Stirnseite (16) des Kolbens (17) mündet und mit einem Filter (41) versehen ist und dessen Eingang (41) mit dem Wassererhitzer (12) verbunden ist und eine Sicherheitsverschlußeinrichtung (43) aufweist, deren Zustand derart von der Relativposition des Kolbens (17) bezüglich der Einlage (19) abhängt, daß sie entweder einen "geschlossenen" Zustand einnimmt, in dem sie den Eingang (42) schließt, wenn die Einlage (19) ihre Ausbringposition und der Kolben (17) seine Verdichterposition einnimmt, oder einen "geöffneten" Zustand, bei dem sie den Eingang (42) freimacht, wenn die Einlage (19) ihre Füllposition und der Kolben (17) seine Ruheposition einnimmt.

7. Kaffeemaschine nach Anspruch 6,
**dadurch gekennzeichnet, daß** die Verschlußeinrichtung (43) von dem Kolben (17) getragen wird und eine rohrförmige Büchse (44) aufweist, die die Seitenwand der Einlage (19) durchsetzt, deren Boden (45) den Eingang (42) des Kanals (39) aufweist und deren anderes Ende (46) durch einen Stopfen (47) verschlossen ist, der eine zentrale Leitung (48) aufweist, deren Eingang (49) mit dem Ende eines Wasserzulaufrohrs (50) verbunden ist und deren Abfluß (51) gegenüber einer verschiebungsbeweglichen Nadel (52) liegt und zu diesem Zweck eine Kralle (53) aufweist, die mit einer an dem Stopfen (37) vorgesehenen schraubenförmigen Rampe (54) in Eingriff gelangt, wobei das Rohr (50) über sein anderes Ende mit einem Drehsteuerorgan (55) verbunden ist, das mit der Seitenwand der Einlage (19) derart drehfest verbunden ist, daß die Drehung des Stopfens (47) durch die Relativverschiebung der Einlage (19) bezüglich des Kolbens (17) hervorgerufen wird.

8. Kaffeemaschine nach einem der vorhergehenden Ansprüche,
**dadurch gekennzeichnet, daß** der Deckel (4) abnehmbar an dem Zylinder (3) gelagert ist und einen zentralen zylindrischen Buckel (58) mit einem etwas kleineren Durchmesser als demjenigen der Einlage (19) aufweist, wobei der Buckel (58) den Durchgang (13) zur Evakuierung des Aufgusses, dessen Mündung (59) mit einem Filter (60) ausgestattet ist, der von der Stirnseite (61) des Buckels (58) getragen wird, sowie an seiner Seitenfläche (62) einen Dichtungsring (63) aufweist, so daß die Aufgußkammer (15) zwischen der Einlage (19) und dem Deckel (4) abgedichtet ist, wenn die Einlage (19) ihre Füllposition einnimmt.

9. Kaffeemaschine nach einem der vorhergehenden Ansprüche,
**dadurch gekennzeichnet, daß** die Betätigungseinrichtung (20) für die Einlage (19) und die Verschiebungsantriebsmittel (18) für den Kolben (17) aus zwei verschiedenen Teilen gebildet sind, die mittels eines elastischen Organs (38), das zwischen die Welle (6) und die Verschiebungsantriebsmittel (18) für den Kolben (17) eingefügt ist, miteinander drehfest verbunden sind, so daß in der Verdichterstellung eine sehr geringe Verschiebung (d) des Kolbens (17) in Richtung auf seine Ruheposition ermöglicht wird, wenn das Mahlgutvolumen (M) in der Aufgußkammer (15) zu groß ist.

10. Kaffeemaschine nach einem der vorhergehenden Ansprüche,
**dadurch gekennzeichnet, daß** Austreibmittel (64) der Einlage (19) zugeordnet sind und einen Schaber (65) aufweisen, der um eine festgelegte Achse (66) quer zum Körper dank Mitteln (67, 68) zum gegenseitigen Zusammenwirken mit der Einlage (19), derart schwenkbar gelagert ist, daß er zwei Positionen einnehmen kann, entweder eine inaktive Position, in die er gebracht ist, wenn die Einlage (19) ihre Füllposition einnimmt, und in der er im Abstand von der Aufgußkammer (15) gehalten wird, oder eine aktive Position, in die er gebracht ist, wenn die Einlage (19) ihre Ausbringposition einnimmt, und in der er den Kaffeesatz (G) in einer quer zur Einlage (19) gerichteten Bewegung drückt und ausspült, so daß dieser durch die Öffnung (14) zum Ausbringen des Kaffeesatzes gelangt.
